# EUROPÄISCHE PATENTSCHRIFT

(11) **EP 1 077 315 B1**
(45) Veröffentlichungstag und Bekanntmachung des Hinweises auf die Patenterteilung: **04.04.2007**
(21) Anmeldenummer: 00116127.2
(22) Anmeldetag: 31.07.2000
(51) Int. Cl.: F01N 3/28

(54) **Katalysator zur Reinigung eines Abgases einer Verbrennungskraftmaschine**
Catalyst for cleaning exhaust gases of an internal combustion engine
Catalyseur de purification de gaz d'échappement de moteur à combustion interne

(30) Priorität: 14.08.1999 DE 19938686
(43) Veröffentlichungstag der Anmeldung: 21.02.2001
(73) Patentinhaber: Volkswagen Aktiengesellschaft, 38436 Wolfsburg (DE)
(72) Erfinder: Engeler, Werner, 38527 Meine (DE); Bechmann, Olaf, 38554 Weyhausen (DE)
(74) Vertreter: Schneider, Henry

(56) Entgegenhaltungen:
- WO-A-97/40266
- FR-A- 1 407 839
- GB-A- 411 655

## Beschreibung

Die Erfindung betrifft einen Katalysator zur Reinigung eines Abgases einer Verbrennungskraftmaschine mit den im Oberbegriff des Anspruchs 1 genannten Merkmalen.

Während eines Verbrennungsvorganges eines Luft-Kraftstoff-Gemisches in der Verbrennungskraftmaschine entstehen in wechselnden Anteilen Schadstoffe, wie Kohlenmonoxid CO, Stickoxide NOₓ und nicht vollständig verbrannte Kohlenwasserstoffe HC. Es ist bekannt, das Abgas über in einem Abgaskanal angeordnete Katalysatoren zu führen, die an ihrer Oberfläche eine katalytisch aktive Beschichtung tragen. Als Tragkörper für die katalytisch aktive Beschichtung eignen sich besonders wabenförmige Monolithe aus Keramik oder Metall in beliebiger Ausführung aber auch Filterkörper für eine Filterung von Dieselabgasen aus Schaumkeramiken.

Die Schadstoffe werden an der katalytisch aktiven Beschichtung entweder durch Reduktionsmittel reduziert (NOₓ) oder durch den vorhandenen Luftsauerstoff oxidiert (CO und HC). Geeignete Katalysatorkomponenten sind dabei beispielsweise Edelmetalle, wie Platin und Palladium, denen wahlweise auch Unedelmetallverbindungen, wie Vanadiumoxid oder Wolframoxid, beigemengt werden. Der Tragkörper sollte in seiner Geometrie derart ausgelegt sein, daß er Strömungskanäle für das Abgas aufweist. Bevorzugt werden Monolithe eingesetzt, bei denen eine Dichte der Strömungskanäle über einen Querschnitt der Monolithe (gewöhnlich als Zelldichte bezeichnet) zwischen 7 cm⁻² und 200 cm⁻² liegt und die Wandungen der Strömungskanäle eine Dicke je nach Zelldichte und Material des Monolithen zwischen 0,02 mm und 0,3 mm aufweisen.

Für moderne Verbrennungskraftmaschinen und Dieselbrennkraftmaschinen gibt es Entwicklungskonzepte, die zwecks Kraftstoffeinsparung mit normierten Luft-Kraftstoff-Verhältnissen größer als Eins, das heißt mit einem Sauerstoffüberschuß, arbeiten. Dieser Sauerstoffüberschuß findet sich auch im Abgas wieder. Infolgedessen ist zum einen ein Anteil der nicht vollständig verbrannten Kohlenwasserstoffe HC am Abgas verringert und zum anderen ist gleichzeitig deren Partikelgröße gering.

Derartige Verbrennungskraftmaschinen müssen jedoch betriebsbedingt, beispielsweise zur Regeneration eines in dem Abgaskanal angeordneten NOₓ-Speichers, in einen Fettbetrieb geschaltet werden. Insbesondere bei Dieselbrennkraftmaschinen führt dies zu einem erheblichen Anstieg der HC-Emission und zusätzlich zu einem Anstieg der Partikelgröße der unvollständig verbrannten Kohlenwasserstoffe (Nebel- und Rußbildung). Die Rußpartikel treffen nachfolgend auf den Monolithen, wo sie in einem Eintrittsbereich des Abgases in den Strömungskanal haften bleiben. Unter Umständen führt dies zu einer ganzen oder teilweisen Verstopfung des Katalysators.

Aus der DE 420 92 13 ist bekannt, dem Eintrittsbereich Widerstandsheizelemente zuzuordnen, die eine Ablagerung der festen oder flüssigen Verbrennungsrückstände nachträglich beheben sollen. Nachteilig hierbei ist jedoch, daß ein zusätzlicher Energieaufwand erforderlich ist und die erforderlichen konstruktiven Änderungen zu einem Kostenmehraufwand führen.

WO 97/40266 beschreibt, Teile des Zylinderinnenraums mit einer glatten, nicht-porösen Beschichtung auszustatten, die das Anhaften von Kraftstoff verhindern und somit die Gemischaufbereitung verbessern soll. Die Beschichtung weist zudem katalytisch wirksame Komponenten auf.

Der Erfindung liegt daher die Aufgabe zugrunde, die Ablagerung flüssiger oder fester Verbrennungsrückstände im Eintrittsbereich des Abgases in den Strömungskanal kostengünstig und in einfacher Weise zu verhindern.

Erfindungsgemäß wird diese Aufgabe durch den Katalysator zur Reinigung des Abgases der Verbrennungskraftmaschine mit den im Anspruch 1 genannten Merkmalen gelöst. Dadurch, daß ein Eintrittsbereich des Abgases in den Strömungskanälen aus einem für flüssige oder feste Verbrennungsrückstände geringhaftenden Material besteht oder eine Schicht eines solchen Materials aufweist, wird die Ablagerung gänzlich verhindert, ohne daß zusätzliche Maßnahmen notwendig sind. Geringhaftend bedeutet, daß hier deutlich weniger, nämlich ≤ 50 %, Anhaftungen im Betrieb vorliegen, als im hinteren Bereich der Kanäle. Nichthaftend bedeutet entsprechend ≤ 10% Anhaftungen gegenüber dem hinteren Bereich der Kanäle.

In bevorzugter Weise wird das nichthaftende Material als eine Schicht auf dem Tragkörper des Katalysators aufgebracht, da dies herstellungstechnisch häufig mit einem geringeren Aufwand verbunden ist. Der Eintrittsbereich wird dabei bis zu einer Tiefe von 0,5 mm bis 100 mm, bevorzugt 1 mm bis 50 mm, insbesondere 2 mm bis 20 mm, aus dem geringhaftenden Material geformt beziehungsweise beschichtet.

Das nichthaftende Material besteht beispielsweise aus hochtemperaturbeständigen Kunststoffen, polierter Keramik, Emaille, einer Glasur, einer Glaskeramik, Glas oder einer Kombination derselben. Auf diese Weise kann jeweils eine individuelle Anpassung der Katalysatoren an die gegebenen technischen Notwendigkeiten erfolgen.

Weitere bevorzugte Ausgestaltungen der Erfindung ergeben sich aus den übrigen, in den Unteransprüchen genannten Merkmalen.

Die Erfindung wird nachfolgend in einem Ausführungsbeispielen anhand der zugehörigen Zeichnungen näher erläutert. Es zeigen:
- Figur 1: eine schematische Schnittansicht einer Anordnung eines Katalysators in einem Abgaskanal und
- Figur 2: eine schematische Schnittansicht durch den Katalysator in einem Eintrittsbereich eines Strömungskanals.

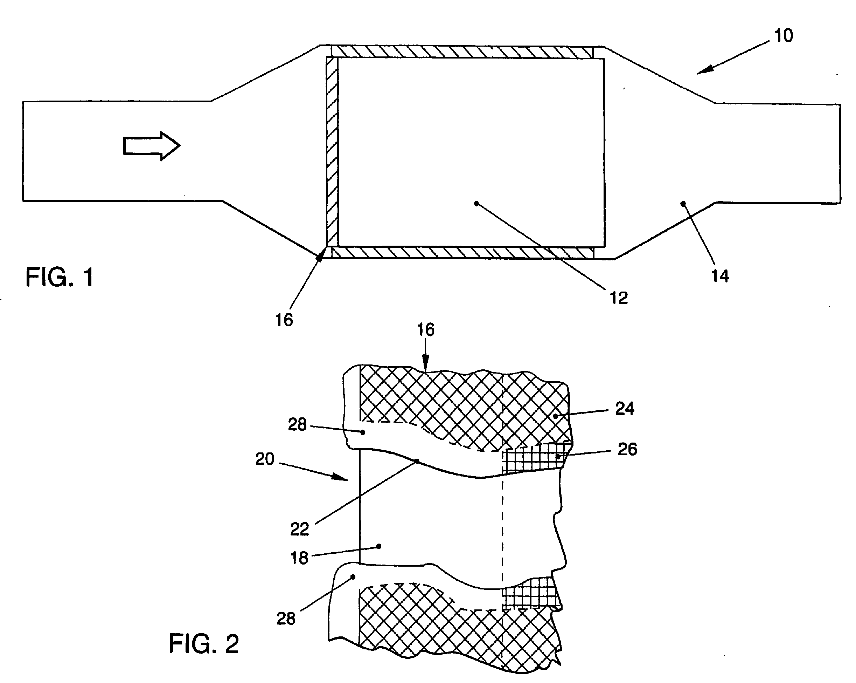

Die Figur 1 zeigt eine Schnittansicht einer Anordnung 10 eines Katalysators 12 in einem Abgaskanal 14 einer hier nicht dargestellten Verbrennungskraftmaschine, insbesondere einer Dieselbrennkraftmaschine. Die während eines Verbrennungsvorganges in der Verbrennungskraftmaschine entstehenden Abgase treffen in einem Eintrittsbereich 16 auf den Katalysator 12. Dabei ist eine geometrische Oberfläche des Katalysators 12 derart gewählt, daß sich innerhalb des Katalysators 12 sogenannte Strömungskanäle 18 ausbilden.

Die Figur 2 zeigt eine Schnittansicht durch einen solchen Strömungskanal 18 in dem Eintrittsbereich 16. Durch eine Eintrittsöffnung 20 tritt das Abgas in den Strömungskanal 18 ein und strömt entlang einer inneren Oberfläche 22 durch den Katalysator 12.

Üblicherweise besteht der Katalysator 12 aus einem metallischen oder keramischen Tragkörper 24, auf dem eine katalytisch aktive Schicht 26 aufgebracht wird. Die katalytisch aktive Schicht 26 beinhaltet Katalysatorkomponenten, wie Edelmetalle oder auch Unedelmetalloxide. Zusammensetzung und Funktionsweise derartiger katalytischer Schichten 26 sind bekannt und werden daher im Rahmen dieser Beschreibung nicht näher erläutert.

Eine geometrische Oberfläche des Tragkörpers 24 kann in einem weiten Maße variabel ausgeführt sein. Denkbar sind beispielsweise wabenförmige Monolithe aber auch Filterkörper aus Schaumkeramiken. Die Herstellung derartiger Tragkörper 24 und auch die Beschichtung der Tragkörper 24 mit der katalytisch aktiven Schicht 26 ist bekannt So kann beispielsweise durch ein- oder mehrmaliges Eintauchen des inerten Tragkörpers 24 in eine aluminiumsilikathaltige, wäßrige Dispersion, die die Katalysatorkomponenten enthält, und mit anschließendem Freiblasen der eventuell verstopften Strömungskanäle 18 die Beschichtung durchgeführt werden. Üblicherweise schließt sich daran eine Trocknung bei Raumtemperatur oder bei erhöhten Temperaturen und meist eine Calcinierung bei Temperaturen oberhalb 250 °C, vorzugsweise zwischen 300 °C und 800 °C, an. In weiteren Verfahrensschritten werden dann in analoger Weise Platingruppenmetalle und Unedelmetallverbindungen auf den Tragkörper 24 aufgebracht.

Der erfindungsgemäße Katalysator 12 gemäß dem Ausführungsbeispiel zeichnet sich dadurch aus, daß in dem Eintrittsbereich 16 ein für flüssige oder feste Verbrennungsrückstände nichthaftendes Material 28 aufgetragen wird. Auf diese Weise kann verhindert werden, daß sich die während eines Verbrennungsvorganges eines Luft-Kraftstoff-Gemisches gebildeten, nur teilweise verbrannten Kohlenwasserstoffe HC in dem Eintrittsbereich 16 des Katalysators 12 ablagern und diesen gegebenenfalls verstopfen können. Insbesondere bei Dieselbrennkraftmaschinen, die betriebsbedingt kurzfristig in einen stöchiometrischen oder Fettbetrieb geschaltet werden, erhöht sich ein Anteil der Kohlenwasserstoffe HC am Abgas und deren Partikelgröße drastisch (Nebel- und Rußbildung).

Das nichthaftende Material 28 ist gemäß dem Ausführungsbeispiel ebenfalls auf dem Tragkörper 24 aufgebracht, was beispielsweise herstellungstechnisch durch Eintauchen in eine geeignete Dispersion, Freiblasen der Strömungskanäle und Trocknung erfolgen kann. Selbstverständlich kann aber auch der gesamte Eintrittsbereich 16 aus dem geringhaftenden Material 28 bestehen, In diesem Fall muß der Eintrittsbereich nachträglich mit dem Katalysator 12 verbunden werden.

Entsprechend den technischen Vorgaben erstreckt sich der Eintrittsbereich 16 0,5 mm bis 100 mm, bevorzugt 1 mm bis 50 mm, insbesondere 2 mm bis 20 mm, in den Strömungskanal 18. Die Auftragung des Materials 28 kann dabei auch stufig oder mit einem Gradienten erfolgen.

Als nichthaftendes Material 28 kommen hochtemperaturbeständige Kunststoffe in Frage, die beispielsweise als Schmelze auf den Tragkörper 24 aufgebracht werden. Denkbar ist auch, den Tragkörper 24 - sofern er aus einer Keramik besteht - im Eintrittsbereich 16 zu polieren. Weiterhin kann das Material 28 eine Emaille oder eine Glasur sein, die in bekannter Weise aufgetragen werden. Daneben ist denkbar, den Eintrittsbereich 16 aus Glas oder einer Glaskeramik herzustellen. Selbstverständlich können die aufgezählten geringhaftenden Materialien 28 auch in einer Kombination verwendet werden, bei der beispielsweise in verschiedenen Bereichen des Eintrittsbereiches 16 unterschiedliche Materialien 28 eingesetzt werden.

## Patentansprüche

1. Katalysator (12) zur Reinigung eines Abgases einer Verbrennungskraftmaschine, insbesondere einer Dieselbrennkraftmaschine, wobei der Katalysator (12) zum Einbau in einen Abgaskanal (14) der Verbrennungskraftmaschine geeignet ist und einen Tragkörper (24) mit Strömungskanälen (18) für das Abgas aufweist, **dadurch gekennzeichnet, daß** ein Eintrittsbereich (16) der Strömungskanäle (18) für das Abgas aus einem für flüssige oder feste Verbrennungsrückstände geringhaftenden Material (28) besteht oder eine Schicht eines solchen Materials (28) aufweist, wobei das geringhaftende Material (28) Anhaftungen von den Verbrennungsrückständen im Betrieb um zumindest 50 % gegenüber einem hinteren Bereich der Strömungskanäle (18) reduziert.

2. Katalysator (12) nach Anspruch 1, **dadurch gekennzeichnet, daß** die Schicht aus dem geringhaftenden Material (28) stufig oder mit einem Gradienten aufgebracht ist.

3. Katalysator (12) nach einem der vorhergehenden Ansprüche, **dadurch gekennzeichnet, daß** sich der Eintrittsbereich (16) des Abgases in die Strömungskanäle (18) 0,5 mm bis 100 mm, bevorzugt 1 mm bis 50 mm, insbesondere 2 mm bis 20 mm, in die Strömungskanäle (18) erstreckt.

4. Katalysator (12) nach einem der vorhergehenden Ansprüche, **dadurch gekennzeichnet, daß** das geringhaftende Material (28) aus der Gruppe ausgewählt wird, die hochtemperaturbeständige Kunststoffe, polierte Keramiken, Emaillen, Glasuren, Glaskeramiken, Gläser umfaßt.

5. Katalysator (12) nach einem der vorhergehenden Ansprüchen, **dadurch gekennzeichnet, daß** der Tragkörper (24) des Katalysators (12) aus einer Schaumkeramik besteht.

6. Katalysator (12) nach einem der vorhergehenden Ansprüchen, **dadurch gekennzeichnet, daß** der Tragkörper (24) des Katalysators (12) eine wabenförmige Geometrie besitzt.

## Claims

1. Catalytic converter (12) for purifying the exhaust gas of an internal combustion engine, in particular of a diesel internal combustion engine, with the catalytic converter (12) being suitable for installation in an exhaust gas duct (14) of the internal combustion engine and having a support body (24) with flow ducts (18) for the exhaust gas, **characterized in that** an inlet region (16) of the flow ducts (18) for the exhaust gas is composed of or has a layer of a material (28) which exhibits low adhesion for liquid or solid combustion residues, with the low-adhesion material (28) reducing adhesions of the combustion residues during operation by at least 50% in relation to a rear region of the flow ducts (18).

2. Catalytic converter (12) according to Claim 1, **characterized in that** the layer of the low-adhesion material (28) is applied in a stepped fashion or with a gradient.

3. Catalytic converter (12) according to one of the preceding claims, **characterized in that** the inlet region (16) of the exhaust gas into the flow ducts (18) extends 0.5 mm to 100 mm, preferably 1 mm to 50 mm, in particular 2 mm to 20 mm, into the flow ducts (18).

4. Catalytic converter (12) according to one of the preceding claims, **characterized in that** the low-adhesion material (28) is selected from the group comprising high-temperature-resistant plastics, polished ceramics, enamels, glazes, glass ceramics and glasses.

5. Catalytic converter (12) according to one of the preceding claims, **characterized in that** the support body (24) of the catalytic converter (12) is composed of a ceramic foam.

6. Catalytic converter (12) according to one of the preceding claims, **characterized in that** the support body (24) of the catalytic converter (12) has a honeycomb-shaped geometry.

## Revendications

1. Catalyseur (12) destiné l'épuration des gaz d'échappement d'un moteur à combustion interne et en particulier d'un moteur diesel, le catalyseur (12) convenant pour être monté dans le canal (14) des gaz d'échappement du moteur à combustion interne et présentant un corps porteur (24) doté de canal d'écoulement (18) pour les gaz d'échappement, **caractérisé en ce qu'**une partie d'entrée (16) des canaux d'écoulement (18) prévus pour les gaz d'échappement est constituée d'un matériau (28) qui adhère peu aux résidus liquides ou solides de combustion ou présente une couche d'un tel matériau (28), le matériau (28) à faible adhérence réduisant les dépôts adhérents de résidus de combustion en fonctionnement d'au moins 50 % par rapport à la partie arrière des canaux d'écoulement (18).

2. Catalyseur (12) selon la revendication 1, **caractérisé en ce que** le matériau (28) à faible adhérence est appliqué par gradins ou avec un gradient.

3. Catalyseur (12) selon l'une des revendications précédentes, **caractérisé en ce que** la partie d'entrée (16) pour les gaz d'échappement dans les canaux d'écoulement (18) s'étend sur 0,5 mm à 100 mm, de préférence sur un 1 mm à 50 mm et en particulier sur 2 mm à 20 mm dans les canaux d'écoulement (18).

4. Catalyseur (12) selon l'une des revendications précédentes, **caractérisé en ce que** le matériau (28) à faible adhérence est sélectionné dans l'ensemble qui comprend les matières synthétiques qui résistent à hautes températures, les céramiques polies, les émaux, les glaçures, les vitrocéramiques et les verres.

5. Catalyseur (12) selon l'une des revendications précédentes, **caractérisé en ce que** le corps porteur (24) du catalyseur (12) est constitué d'une céramique poreuse.

6. Catalyseur (12) selon l'une des revendications précédentes, **caractérisé en ce que** les corps porteur (24) du catalyseur (12) a une géométrie en forme de nid d'abeilles.
